# EUROPÄISCHE PATENTSCHRIFT

(11) **EP 0 926 039 B1**
(45) Veröffentlichungstag und Bekanntmachung des Hinweises auf die Patenterteilung: **17.09.2003**
(21) Anmeldenummer: 98124280.3
(22) Anmeldetag: 18.12.1998
(51) Int. Cl.: B62D 1/04, B60R 21/16

(54) **Lenkrad mit einem Airbagmodul**
Steering wheel with an airbag module
Volant comportant un module de coussin gonflable

(30) Priorität: 24.12.1997 DE 29722824 U
(43) Veröffentlichungstag der Anmeldung: 30.06.1999
(73) Patentinhaber: TRW Automotive Safety Systems GmbH, 63743 Aschaffenburg (DE)
(72) Erfinder: Derrick, John-Oliver, 97265 Hettstadt (DE)
(74) Vertreter: Degwert, Hartmut, Dipl.-Phys.

(56) Entgegenhaltungen:
- EP-A- 0 754 600
- DE-A- 3 433 941
- DE-U- 29 621 295
- US-A- 5 267 486

## Beschreibung

Die Erfindung betrifft ein Lenkrad mit einem Airbagmodul, das bezüglich einer Montageebene (x-y-Ebene) sowie bezüglich einer Montagerichtung (z-Richtung) unbeweglich, jedoch lösbar mit dem Lenkrad befestigt ist.

Für die Befestigung eines Airbagmoduls in einem Lenkrad sind bereits zahlreiche Vorschläge gemacht worden. Werden die Lenkräder bei der Endmontage mittels einer auf das Gewindeende der Lenksäule aufgeschraubten Mutter befestigt, kann das Airbagmodul erst nach der Montage des Lenkrades eingesetzt werden, weil es den zentralen Bereich oberhalb der Lenkradnabe einnimmt, der zum Aufschrauben der Mutter frei zugänglich bleiben muß. Will man sogenannte integrierte Airbags vorsehen, bei denen das Lenkrad zusammen mit dem fertig montierten Airbag angeliefert und auf die Lenksäule aufgesetzt wird, so muß man für eine andere Lenkradbefestigung sorgen, für die ebenfalls schon Vorschläge gemacht worden sind, die jedoch alle schwieriger zu handhaben sind, als die übliche, millionenfach bewährte Lenkradbefestigung mit einer zentralen Mutter.

Bei dieser Version kann das Airbagmodul - wie gesagt - erst montiert werden, wenn das Lenkrad auf die Lenksäule aufgesteckt und mit dieser befestigt ist. Für die Befestigung des Airbagmoduls im Lenkrad müssen dann Schraubverbindungen vorgesehen werden, deren Zugriffsmöglichkeiten aus optischen Gründen nicht auf der Oberseite des Lenkrades vorgesehen werden können. Das Einsetzen von Schrauben und die Betätigung von Schraubverbindungen von der Rückseite des Lenkrades her ist wegen der beengten Platzverhältnisse immer schwierig und zeitaufwendig. Da man im Kraftfahrzeugbau heute immer kürzere Endmontagezeiten anstrebt, werden Schraubverbindungen und insbesondere solche, die von der Rückseite des Lenkrades her betätigt werden müssen, als äußerst nachteilig angesehen.

Man hat daher auch schon versucht, Airbagmodule mittels sogenannter Snap-In- oder Clip-Verbindungen am Lenkrad zu befestigen. Es hat sich jedoch herausgestellt, daß herkömmliche Verbindungen dieser Art nicht geeignet sind, weil sie nicht in der Lage sind, die sogenannten "Schußkräfte" bei der Auslösung eines Airbags aufzunehmen oder weil diese Verbindungen bei der dynamischen Belastung ausrasten. Derartige Verbindungen stehen in Schließstellung üblicherweise unter einer gewissen Vorspannung, wodurch die Snap-In- oder Clip-Verbindung gesichert ist und unter normalen Bedingungen nicht ausrasten kann. Beim explosionsartigen Aufblasen eines Airbags werden derartige Verbindungen jedoch zunächst im Sinne einer Beseitigung der Vorspannung belastet, so daß sie die Rastvorsprünge nicht mehr sicher hintergreifen können, wenn die unmittelbar darauffolgende Belastung in Vorspannrichtung eintritt.

Aus der DE-U-296 21 295 ist ein Lenkrad mit einem Airbagmodul bekannt, das bezüglich einer Montageebene (x-y-Ebene) sowie bezüglich einer Montagerichtung (z-Richtung) unbeweglich, jedoch lösbar mit dem Lenkrad befestigt ist. Am Lenkradskelett sind zwei in Montagerichtung aus der Montageebene vorstehende Führungsstifte mit jeweils ein auf dem Führungsstift vorgesehenes, als Auflagefläche dienendes, elastisches Distanzelement sowie zwei sich senkrecht zur Montageebene erstreckende Eingriffsöffnungen vorgesehen. In einem dem Lenkradskelett gegenüberliegenden Generatorträger des Airbagmoduls sind zu den Führungsstiften korrespondierende Ausnehmungen ausgebildet, sowie an dem Generatorträger zu den Eingriffsöffnungen korrespondierende starre Eingriffshaken vorgesehen, die zur Montagerichtung schräggestellten Führungsflächen aufweisen. In jeder Eingriffsöffnung ist ein seitlich geführtes Schieberelement vorgesehen. Dem Schieberelement ist eine vorgespannte Schraubenfeder zugeordnet. Bei der Montage des Airbagmoduls drückt der Haken das Schieberelement seitlich aus seiner Ruhelage (d.h. senkrecht zur Montagerichtung) wodurch die vorgespannte Schraubenfeder zusammengedrückt wird. In der Montageendposition schnappt das Schieberelement unter dem Druck der Schraubenfeder in seiner Ruhelage zurück, wobei der Haken mit einem Rastvorsprung den Rand des Schieberelements hintergreift. Zur Demontage kann das Schieberelement mittels eines Werkzeugs aus der Ruhelage in einer Ausrastlage (aus dem Bereich des Hakens) herausgedreht werden, so daß das Airbagmodul vom Lenkrad aufgehoben werden kann.

Aus der EP-A-0 754 600 ist ein Lenkrad mit einem Airbagmodul bekannt, das bezüglich einer Montageebene (x-y-Ebene) sowie bezüglich einer Montagerichtung (z-Richtung) unbeweglich, jedoch lösbar mit dem Lenkrad befestigt ist. Am Lenkradskelett sind vier Befestigungssäulen mit jeweils einer sich parallel zur Montageebene erstreckenden Auflagefläche sowie zwei sich senkrecht zur Montageebene erstreckende Verriegelungszungen vorgesehen. An einem dem Lenkradskelett gegenüberliegenden Generatorträger des Airbagmoduls sind zu den Verriegelungszungen korrespondierende, mit jeweils einer Eingriffsöffnung versehene, Eingriffslaschen aus elastischem Material vorgesehen, die bei der Montage des Airbagmoduls von zur Montagerichtung schräggestellten Führungsflächen am Verriegelungszungen aus ihrer Ruhelage senkrecht zur Montagerichtung elastisch abgelenkt werden. In der Montageendposition schwenken die Eingriffslaschen in ihre Ruhelage zurück und hintergreifen den Rand der Verriegelungszungen. Zur Demontage sind die Eingriffslaschen mittels eines Werkzeugs aus der Ruhelage in eine Ausrastlage schwenkbar.

Es besteht somit die Aufgabe, für ein Lenkrad der eingangs genannten Art eine Möglichkeit zur Befestigung des Airbags vorzuschlagen, die mit sehr kurzen Zeiten bei der Endmontage auskommt, auf der Oberseite des Lenkrades nicht sichtbar ist, zur Befestigung keine Betätigung von der Rückseite des Lenkrades her erfordert und die möglichst einfach und kostengünstig im Rahmen üblicher Herstellungsschritte für das Lenkrad und das Airbagmodul realisiert werden kann.

Zur Lösung dieser Aufgabe wird erfindungsgemäß vorgeschlagen, daß am Lenkradskelett wenigstens zwei sich parallel zur Montageebene erstreckende Auflageflächen, beabstandet davon wenigstens zwei in Montagerichtung aus der Montageebene vorstehende Führungsstifte sowie wenigstens zwei sich senkrecht zur Montageebene erstreckende Eingriffsöffnungen vorgesehen sind, und daß in einem dem Lenkradskelett gegenüberliegenden Generatorträger des Airbagmoduls zu den Führungsstiften korrespondierende Ausnehmungen ausgebildet, sowie daß an dem Generatorträger zu den Eingriffsöffnungen korrespondierende Eingriffslaschen aus elastischem Material vorgesehen sind, die bei der Montage des Airbagmoduls von zur Montagerichtung schräggestellten Führungsflächen aus ihrer Ruhelage senkrecht zur Montagerichtung elastisch abgelenkt werden und die in der Montageendposition in ihre Ruhelage zurückschwenken und mit einem Rastvorsprung den Rand der Eingriffsöffnungen hintergreifen.

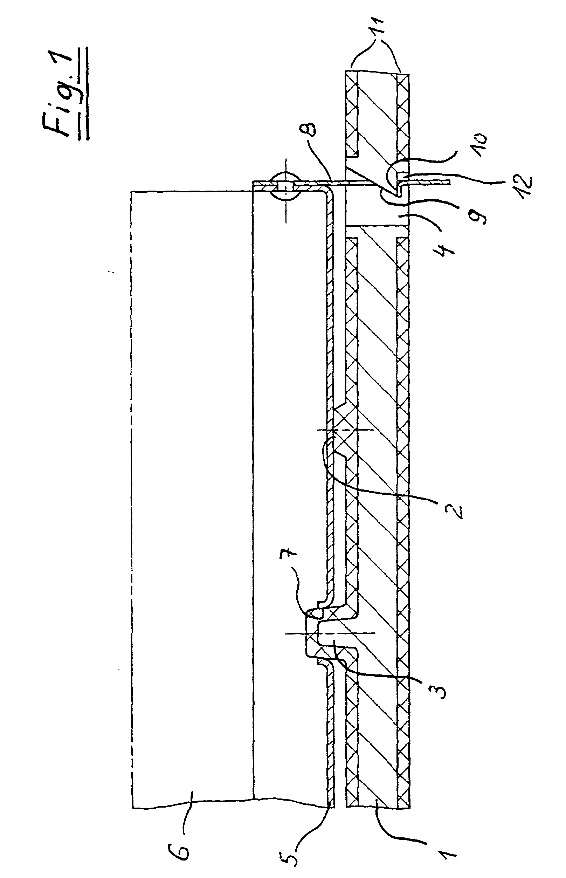

Vorteilhafte Weiterbildungen des Erfindungsgedankens sind in den Unteransprüchen 2 bis 8 beschrieben. Weitere Einzelheiten werden anhand des in Figur 1 dargestellten Ausführungsbeispiels näher erläutert.

Figur 1 zeigt einen Schnitt durch einen Teil eines Lenkradskelettes 1 und eines Generatorträgers 5, wobei das Airbagmodul 6 nur gestrichelt angedeutet ist.

Das Lenkradskelett 1 ist im Ausführungsbeispiel mit einer Ummantelung 11 versehen, in der Auflageflächen 2 parallel zur Montageebene ausgebildet sind. Am Lenkradskelett 1 sind außerdem Führungsstifte 3 ausgebildet, die von der Ummantelung 11 bedeckt sind.

In seitlichem Abstand zur Auflagefläche 2 ist im Lenkradskelett 1 eine sich senkrecht zur Montageebene erstreckende Eingriffsöffnung 4 vorgesehen, in die eine mit dem Generatorträger 5 verbundene Eingriffslasche 8 aus elastischem Material eingreifen kann, wenn das Airbagmodul 6 zusammen mit dem Generatorträger 5 auf das Lenkrad aufgesteckt wird. Dabei wird das untere Ende der Eingriffslaschen 8 an einer schräggestellten Führungsfläche 9 der Eingriffsöffnung 4 aus ihrer Ruhelage senkrecht zur Montagerichtung elastisch abgelenkt. In der Montageendposition können die Eingriffslaschen 8 in ihre Ruhelage zurückschwenken und mit einem Rastvorsprung 10 den Rand der Eingriffsöffnung 4 hintergreifen. Dabei werden die Abmessungen so gewählt, daß die Ummantelung 11 im Bereich der Auflageflächen 2 in montiertem Zustand so weit elastisch verformt ist, daß die Rastvorsprünge 10 dauerhaft und mit Vorspannung gegen den rückseitigen Rand der Eingriffsöffnung 4 angedrückt werden. Alternativ kann der Boden des Generatorträgers 5 so ausgebildet werden, daß er sich beim Einrasten leicht durchbiegt und seinerseits für die erforderliche Vorspannung der Rastverbindung sorgt.

Die Eingriffslasche 8 kann einstückig aus dem Material des Generatorträgers 5 geformt oder - wie dargestellt - an den Generatorträger 5 angenietet sein. Zwischen der Eingriffslasche 8 und dem Lenkradskelett 4 ist ein Eingriffsspalt 12 vorgesehen, in den von der Rückseite des Lenkrades her ein Werkzeug, wie beispielsweise ein Schraubenzieher, eingesteckt werden kann, wobei die Rastverbindung durch Drehung des Schraubenziehers lösbar ist.

Die erfindungsgemäß vorgeschlagene Befestigung eines Airbagmoduls in einem Lenkrad löst alle eingangs gestellten Teilaufgaben und hat sich in zahlreichen Versuchen bewährt, bei denen die Airbags bestimmungsgemäß innerhalb der üblichen Parameterbereiche explosionsartig aufgeblasen wurden. Die Verbindung kann festigkeitsmäßig ohne weiteres so ausgelegt werden, daß sie den vorkommenden "Schußkräften" standhält und daß ein unbeabsichtigtes Ausrasten infolge der gegenläufigen, dynamischen Beanspruchungen nicht eintritt. Damit ist das Ziel erreicht, eine in der Endmontage einfach zu handhabende Airbagbefestigung vorzusehen, ohne daß für die Airbagfunktionen irgendwelche Nachteile in Kauf genommen werden müßten.

## Patentansprüche

1. Lenkrad mit einem Airbagmodul, das bezüglich einer Montageebene d.h. x-y-Ebene sowie bezüglich einer Montagerichtung d.h. z-Richtung unbeweglich, jedoch lösbar mit dem Lenkrad befestigt ist, wobei am Lenkradskelett (1) wenigstens zwei sich parallel zur Montageebene erstreckende Auflageflächen (2), beabstandet davon wenigstens zwei in Montagerichtung aus der Montageebene vorstehende Führungsstifte (3) sowie wenigstens zwei sich senkrecht zur Montageebene erstreckende Eingriffsöffnungen (4) vorgesehen sind, und wobei in einem dem Lenkradskelett (1) gegenüberliegenden Generatorträger (5) des Airbagmoduls (6) zu den Führungsstiften (3) korrespondierende Ausnehmungen (7) ausgebildet, sowie an dem Generatorträger (5) zu den Eingriffsöffnungen (4) korrespondierende Eingriffslaschen (8) aus elastischem Material vorgesehen sind, die bei der Montage des Airbagmoduls (6) von zur Montagerichtung schräggestellten Führungsflächen (9) aus ihrer Ruhelage senkrecht zur Montagerichtung elastisch abgelenkt werden und die in der Montageendposition in ihre Ruhelage zurückschwenken und mit einem Rastvorsprung (10) den Rand der Eingriffsöffnungen (4) hintergreifen.

2. Lenkrad nach Anspruch 1, **dadurch gekennzeichnet, daß** das Lenkradskelett (1) zumindest im Bereich der Auflageflächen (2) und der Führungsstifte (3) mit einer Ummantelung (11) versehen ist.

3. Lenkrad nach Anspruch 2, **dadurch gekennzeichnet, daß** die Ummantelung (11) aus geschäumtem Kunststoff besteht.

4. Lenkrad nach einem der Ansprüche 1 bis 3, **dadurch gekennzeichnet, daß** die Auflageflächen (2) und die Eingriffsöffnungen (4) am Lenkradskelett (1) einerseits sowie die Eingriffslaschen (8) mit den Rastvorsprüngen (10) andererseits derart aufeinander abgestimmt sind, daß die Ummantelung (11) im Bereich der Auflageflächen (2) in montiertem Zustand so weit elastisch verformt ist, daß die Rastvorsprünge (10) dauerhaft gegen den rückseitigen Rand der Eingriffsöffnungen (4) angedrückt werden.

5. Lenkrad nach einem der Ansprüche 1 bis 4, **dadurch gekennzeichnet, daß** die Ausnehmungen (7) im Generatorträger (5) einen nach innen umgebördelten Rand aufweisen.

6. Lenkrad nach einem der Ansprüche 1 bis 5, **dadurch gekennzeichnet, daß** die Eingriffslaschen (8) aus Federstahl bestehen.

7. Lenkrad nach Anspruch 6, **dadurch gekennzeichnet, daß** die Eingriffslaschen (8) an in Montagerichtung verlaufenden Bereichen (12) des Generatorträgers (5) angenietet sind.

8. Lenkrad nach einem der Ansprüche 1 bis 7, **dadurch gekennzeichnet, daß** die Rastvorsprünge (10) der Eingriffslaschen (8) mittels eines Werkzeugs aus der Ruhelage in eine Ausrastlage schwenkbar sind.

## Claims

1. A steering wheel comprising an air bag module secured to be immovable relative to a fitting plane, i.e. x-y plane, as well as relative to a fitting direction, i.e. z direction, but releasably from the steering wheel, the steering wheel skeleton (1) having provided thereon at least two mounting surfaces (2) extending parallel to the fitting plane, at least two guide pegs (3) spaced away from the mounting surfaces (2) and protruding from the fitting plane in the fitting direction, as well as at least two engagement openings (4) extending perpendicularly to the fitting plane, and recesses (7) corresponding to the guide pegs (3) being configured in an inflator mount (5) of the air bag module (6) located opposite the steering wheel skeleton (1), and engagement tabs (8) made of an elastic material and corresponding to the engagement openings (4) being provided on the inflator mount (5), the engagement tabs (8) being elastically deflected from their resting position perpendicularly to the fitting direction by guide surfaces (9) inclined relative to the fitting direction when the air bag module (6) is fitted, and returning to their resting position in the final assembly position to engage behind the rim of the engagement openings (4) by a latching protuberance (10).

2. The steering wheel as set forth in claim 1, **characterized in that** the steering wheel skeleton (1) is provided with a sheathing (11) at least in the region of the mounting surfaces (2) and the guide pegs (3).

3. The steering wheel as set forth in claim 2, **characterized in that** the sheathing (11) is made of an expanded plastics material.

4. The steering wheel as set forth in any of the claims 1 to 3, **characterized in that** the mounting surfaces (2) and the engagement openings (4) on the steering wheel skeleton (1), on the one hand, and the engagement tabs (8) with the latching protuberances (10), on the other, are adapted to each other such that the sheathing (11) is elastically deformed in the fitted condition in the region of the mounting surfaces (2) to such an extent that the latching protuberances (10) are permanently urged against the rear side rim of the engagement openings (4).

5. The steering wheel as set forth in any of the claims 1 to 4, **characterized in that** the recesses (7) in the inflator mount (5) each have a rim crimped inwards.

6. The steering wheel as set forth in any of the claims 1 to 5, **characterized in that** the engagement tabs (8) are made of spring steel.

7. The steering wheel as set forth in claim 6, **characterized in that** the engagement tabs (8) are riveted to portions (12) of the inflator mount (5) oriented in the fitting direction.

8. The steering wheel as set forth in any of the claims 1 to 7, **characterized in that** the latching protuberances (10) of the engagement tabs (8) can be pivoted from the resting position into an unlatching position by means of a tool.

## Revendications

1. Volant comprenant un module d'airbag qui est fixé de manière immobile par rapport à un plan de montage, c'est-à-dire à un plan x-y, ainsi que par rapport à une direction de montage, c'est-à-dire une direction z, mais de manière détachable du volant, étant prévu sur le squelette de volant (1): au moins deux surfaces d'appui (2) s'étendant parallèlement au plan de montage, au moins deux goujons de guidage (3) espacés de celles-ci faisant saillie hors du plan de montage en direction de montage, ainsi qu'au moins deux ouvertures d'engagement (4) s'étendant perpendiculairement au plan de montage ; et des évidements correspondant aux goujons de guidage (3) étant réalisés dans un support de générateur (5) du module d'airbag (6) opposé au squelette de volant (1), ainsi que des pattes d'engagement (8) en matériau élastique correspondant aux ouvertures d'engagement (4) étant prévues sur le support de générateur (5), lesquelles, au montage du module d'airbag, sont déviées élastiquement par des surfaces de guidage (9) inclinées par rapport à la direction de montage, depuis leur position de repos perpendiculairement à la direction de montage et, dans la position finale de montage, reviennent dans leur position de repos et engagent par l'arrière avec une saillie d'enclenchement (10) le bord des ouvertures d'engagement (4).

2. Volant selon la revendication 1, **caractérisé en ce que** le squelette de volant (1) est pourvu d'une gaine au moins dans la région des surfaces d'appui (2) et des goujons de guidage (3).

3. Volant selon la revendication 2, **caractérisé en ce que** la gaine (11) est en matière plastique expansée.

4. Volant selon l'une des revendications 1 à 3, **caractérisé en ce que** les d'une part surfaces d'appui (2) et les ouvertures d'engagement (4) sur le squelette de volant (1), et d'autre part les pattes d'engagement (8) avec les saillies d'enclenchement (10), sont adaptées les unes aux autres de telle sorte qu'à l'état monté, la gaine (11) est élastiquement déformée dans la région des surfaces d'appui (2) de telle sorte que les saillies d'enclenchement (10) sont pressées de manière durable contre le bord arrière des ouvertures d'engagement (4).

5. Volant selon l'une des revendications 1 à 4, **caractérisé en ce que** les évidements (7) dans le support de générateur (5) présentent un bord rabattu vers l'intérieur.

6. Volant selon l'une des revendications 1 à 5, **caractérisé en ce que** les pattes d'engagement (8) sont en acier à ressort.

7. Volant selon la revendication 6, **caractérisé en ce que** les pattes d'engagement (8) sont rivetées sur des régions (12) du support de générateur (5) qui s'étendent en direction de montage.

8. Volant selon l'une des revendications 1 à 7, **caractérisé en ce que** l'on peut faire pivoter les saillies d'enclenchement (10) des pattes d'engagement (8) au moyen d'un outil depuis la position de repos jusque dans une position dégagée.
